# EUROPÄISCHE PATENTANMELDUNG

(11) **EP 3 480 106 A1**
(43) Veröffentlichungstag der Anmeldung: **08.05.2019**
(21) Anmeldenummer: 18197878.4
(22) Anmeldetag: 01.10.2018
(51) Int. Cl.: B64B 1/06, B64B 1/08, B64C 1/08

(54) **VAKUUMLUFTSCHIFF AUS EINZELNEN ELEMENTEN**

(30) Priorität: 29.09.2017 DE 102017122707
(71) Anmelder: Turinetti, Ludovico, 10125 Turin (IT)
(72) Erfinder: Turinetti, Ludovico, 10125 Turin (IT)
(74) Vertreter: Hertin und Partner Rechts- und Patentanwälte PartG mbB

(57) **Zusammenfassung**

Die Erfindung betrifft in einem Aspekt einen dreidimensionalen, geschlossenen und ellipsoiden Hohlkörper umfassend mindestens zweiunddreißig Elemente, wobei jedes Element Verbindungsflächen zur Verbindung mit Verbindungsflächen der anderen Elemente aufweist, wobei der Hohlkörper von den Elementen im Wesentlichen gebildet wird, wobei die Verbindungsflächen im Wesentlichen trapezförmig ausgebildet sind, und wobei der Hohlkörper druckdicht ausgebildet ist und im Inneren des Hohlkörpers ein erster Druck vorliegt und außerhalb des Hohlkörpers ein zweiter Druck vorliegt.

In einem weiteren Aspekt betrifft die Erfindung ein Luftschiff umfassend einen Auftriebskörper, wobei der Hohlkörper den Auftriebskörper bildet.

In einem zusätzlichen Aspekt betrifft die Erfindung ein Verfahren zur Verwendung des Hohlkörpers nach einem oder mehreren der vorigen Ansprüche als Auftriebskörper für ein Luftschiff, wobei Elemente zu einem Hohlkörper zusammengefügt werden und ein Vakuum im Inneren des Hohlkörpers erzeugt wird.

## Beschreibung

Die Erfindung betrifft in einem Aspekt einen dreidimensionalen, geschlossenen und ellipsoiden Hohlkörper umfassend mindestens zweiunddreißig Elemente, wobei jedes Element Verbindungsflächen zur Verbindung mit Verbindungsflächen der anderen Elemente aufweist, wobei der Hohlkörper von den Elementen im Wesentlichen gebildet wird, wobei die Verbindungsflächen im Wesentlichen trapezförmig ausgebildet sind, und wobei der Hohlkörper druckdicht ausgebildet ist und im Inneren des Hohlkörpers ein erster Druck vorliegt und außerhalb des Hohlkörpers ein zweiter Druck vorliegt.

In einem weiteren Aspekt betrifft die Erfindung ein Luftschiff umfassend einen Auftriebskörper, wobei der Hohlkörper den Auftriebskörper bildet.

In einem zusätzlichen Aspekt betrifft die Erfindung ein Verfahren zur Verwendung des Hohlkörpers nach einem oder mehreren der vorigen Ansprüche als Auftriebskörper für ein Luftschiff, wobei Elemente zu einem Hohlkörper zusammengefügtwerden und ein Vakuum im Inneren des Hohlkörpers erzeugt wird.

### Hintergrund und Stand der Technik

Das Fliegen ist ein uralter Traum der Menschen. Zum ersten Mal wurde ein bemannter Flug mit einem Heißluftballon von den Gebrüdern Montgolfier im Jahre 1783 absolviert. Inzwischen wurden viele Formen des Fliegens mit Ballons, Luftschiffen und Flugzeugen realisiert.

Schon früh wurde eine Version des aerostatischen Fliegens erdacht, welche bis heute ein Menschheitstraum geblieben ist. Damals entwarf der Jesuit, Philosoph und Physiker Francesco Lana de Terzi seine "Aereonave". Inspiriert war er von den sogenannten Magdeburger Halbkugeln von Otto von Gericke, zwei Halbkugeln, die zu einer Kugel zusammengefügt wurden und in deren innerem Hohlraum ein Vakuum gepumpt wurde. Die durch den äußeren Atmosphärendruck zusammengehaltenen Halbkugeln ließen sich auch durch entgegengesetztes ziehen zweier Pferdegespanne nicht trennen. Lana de Terzi hatte nun die Idee, dass solche "Vakuumkugeln" nicht nur sehr stabil, sondern auch sehr leicht sein müssten. Er berechnete, dass bei Verwendung von dünnen Kupferwänden die von einer Kugel verdrängte Luft mehr wiegt als die Kugel selber. Mehrere solcher Kugeln sollten dann einem Luftschiff Auftrieb verleihen. Jedoch fehlten zu damaligen Zeiten die Möglichkeiten, entsprechend dünnes Kupferblech herzustellen, außerdem wäre dieses wohl durch den Umgebungsdruck zusammengedrückt worden. Lange Zeit ist man also davon ausgegangen, dass solch ein "Vakuumluftschiff" nicht realisierbar wäre, weil kein Material gleichzeitig leicht und steif genug wäre. Es gibt jedoch heute aufgrund neuer Verarbeitungstechniken und Materialien Überlegungen, wie ein solches Luftschiff gebaut werden könnte.

Aus der DE 100 64 873 B4 ist ein Vakuumauftriebskörper bekannt, der aus komplizierten, mehrschichtigen Polygonelementen zusammengesetzt wird, welche von einer luftdichten Außenhülle umgeben werden. Der Aufbau ist jedoch sehr aufwendig und aufgrund der Vielzahl und der Größe der verwendeten Elemente nicht ideal in Bezug auf das Gewicht. Außerdem müssen die einzelnen Polygonelemente über Befestigungsmittel miteinander verbunden werden, wodurch zusätzliche Aufwand und Gewicht verursacht werden.

United States Patent 4,113,206 beschreibt einen Vakuumauftriebskörper in Form einer Kugel, der aus einem Rahmengerüst mit dreieckigen Zwischenräumen besteht, welches von einer luftdichten, aus mehreren Elementen zusammengefügten Hülle umgeben ist. Bei dieser Konstruktion scheint es nicht einfach zu sein, den Rahmen stabil genug auszuführen, um die senkrecht auf die äußere Hülle wirkenden Kompressionskräfte des Außendrucks zu kompensieren und dabei gleichzeitig die Beschränkungen bezüglich des Gewichts zu erfüllen. Dabei sind konstruktionsbedingt auch Verbindungselemente zur Zusammenführung des Rahmens nötig, welche zusätzliches Gewicht verursachen.

Es sind jedoch Objekte bekannt, die aufgrund ihrer Bauart Vorbild für die Konstruktion eines modernen Vakuumluftschiffs sein könnten. Ein Fußball etwa bildet einen kugelförmigen Körper, welche erstaunlicherweise nur aus 5- und 6-eckigen Elementen besteht, gleichzeitig durch einen Druckunterschied zwischen seinem inneren und der Umgebungsluft eine hohe Formstabilität aufweist. Wären die Druckverhältnisse jedoch genau umgekehrt, mit einem äußeren Überdruck im Vergleich zum inneren des Fußballs, wäre der Ball nicht stabil geformt. Daher kann die Struktur des Fußballs nicht eins zu eins für die Konstruktion eines Vakuumluftschiffs übernommen werden.

GB 2 333 750 B beschreibt einen Vakuumauftriebskörper in Form eines Fußballs, jedoch mit abgeflachten anstelle von runden Elementen, der durch ein mit Polyester bespanntes Rahmengerüst gebildet wird, welches die Kanten des Körpers umfasst und dem Körper auch bei umgekehrten Druckverhältnissen Stabilität gibt. Auch hier müssen Rahmen und Bespannung leicht und gleichzeitig stabil genug sein, um den Kompressionskräften des Außendrucks zu widerstehen. Des Weiteren sind auch bei dieser Konstruktion zusätzliche Verbindungselemente zwischen den Rahmenelementen nötig, die den Leichtbau zusätzlich erschweren. Darüber hinaus ist bei all den vorangestellten Vorrichtungen die Wirkung der Kompressionskräfte auf die tragenden Elemente ungünstig. Die bekannten Vorrichtungen des Standes der Technik sind nicht nur daher äußerst schwierig zu realisieren.

Es gibt auch ein zweites, schon aus römischen Zeiten Bekanntes Objekt, welches eine zusätzliche Inspiration für eine stabile Kugel ähnlich zu einem Fußball auch bei zu diesem umgekehrten Druckverhältnissen sein kann. Es handelt sich um den römischen Bogen, der ohne typische Verbindungstechniken, allein auf Grund des auf den Verbindungsflächen der Steine wirkenden Drucks, zusammenhält. Eine Verwendung dieser römischen Bautechnik für ein Vakuumluftschiff ist bislang unbekannt.

Des Weiteren stehen heute leichte und äußerst steife bzw. stabile Materialien zur Verfügung, die sich für den Bau eines Vakuumluftschiffs anbieten und innovative Baustrukturen und Geometrien ermöglichen.

### Aufgabe der Erfindung

Aufgabe der Erfindung ist es, einen Hohlkörper, ein Luftschiff sowie ein Verfahren bereitzustellen, welches die Nachteile des Standes der Technik beseitigt.

Insbesondere sollen ein Hohlkörper, ein Luftschiff sowie ein Verfahren bereitgestellt werden, um einen leichten und gleichzeitig äußerst stabilen Auftriebskörper sowie ein Luftschiff bereitzustellen, wobei der Auftriebskörper ohne zusätzliche Verbindungsmittel zwischen den wesentlichen Elementen auskommt und daher weiteres Gewicht eingespart werden kann. Der Auftriebskörper soll keine tragende, feste Rahmenstruktur benötigen und nur aus Elementen gebildet werden, welche im Wesentlichen seine Oberfläche darstellen. Des Weiteren ist soll eine günstige Kräftewirkung zwischen den Elementen angestrebt werden, welche der Stabilität zuträglich ist, und bei der die Elemente fast keiner Spannung, sondern im Wesentlichen nur der Kompression unterworfen sind. Der Hohlkörper soll des Weiteren einfach zu bauen sein.

### Kennzeichnung der Erfindung

Gelöst wird die Aufgabe durch die Merkmale des Anspruchs 1. Vorteilhafte Ausgestaltungen der Erfindung sind in den abhängigen Ansprüchen beschrieben.

In einem ersten Aspekt betrifft die Erfindung einen dreidimensionalen, geschlossenen und ellipsoiden Hohlkörper umfassend mindestens zweiunddreißig Elemente, wobei jedes Element Verbindungsflächen zur Verbindung mit Verbindungsflächen der anderen Elemente aufweist, dadurch gekennzeichnet, dass der Hohlkörper von den Elementen gebildet wird, wobei die Verbindungsflächen im Wesentlichen trapezförmig ausgebildet sind, und wobei der Hohlkörper druckdicht ausgebildet ist und im Inneren des Hohlkörpers ein erster Druck vorliegt und außerhalb des Hohlkörpers ein zweiter Druck vorliegt.

In einem weiteren Aspekt betrifft die Erfindung ein Luftschiff umfassend einen Auftriebskörper, wobei ein Hohlkörper den Auftriebskörper bildet.

In einem weiteren Aspekt betrifft die Erfindung ein Verfahren zur Verwendung eines Hohlkörpers als Auftriebskörper für ein Luftschiff, wobei
- Elemente zu einem Hohlkörper zusammengefügt werden,
- ein Vakuum im Inneren des Hohlkörpers erzeugt wird.

### Definitionen und bevorzugte Ausführungsformen der Erfindung

In einem ersten Aspekt betrifft die Erfindung einen dreidimensionalen, geschlossenen und ellipsoiden Hohlkörper umfassend mindestens zweiunddreißig Elemente, wobei jedes Element Verbindungsflächen zur Verbindung mit Verbindungsflächen der anderen Elemente aufweist, dadurch gekennzeichnet, dass der Hohlkörper im Wesentlichen von den Elementen gebildet wird, wobei die Verbindungsflächen im Wesentlichen trapezförmig ausgebildet sind, und wobei der Hohlkörper druckdicht ausgebildet ist und im Inneren des Hohlkörpers ein erster Druck vorliegt und außerhalb des Hohlkörpers ein zweiter Druck vorliegt.

Ein dreidimensionaler Hohlkörper ist bevorzugt ein Körper, der in alle drei Dimensionen des dreidimensionalen, euklidischen Raumes ausgedehnt ist. Der euklidische Raum kann beispielsweise durch kartesischen Koordinaten, üblicherweise angegeben in x-, y- und z-Richtung, dargestellt werden. Die durch diese Raumkoordinaten aufgespannten Dimensionen bezeichnet man bevorzugt als Raumdimensionen, wobei insbesondere keine Raumdimension einem Punkt, eine Raumdimension einer Geraden oder Kurve und zwei Raumdimensionen einer Fläche entsprechen. Vor allem ist ein dreidimensionaler Körper weder Punkt-, noch Linien- oder Flächenförmig, wobei mit Flächenförmig bevorzugt eine 2-dimensionale, flache Fläche im Gegensatz zu einer gekrümmten Begrenzungsfläche eines beliebigen dreidimensionalen Körpers gemeint ist.

Ein geschlossener Hohlkörper ist bevorzugt ein Körper, dessen äußere Begrenzungsfläche den dreidimensionalen Raum in zwei zusammenhängende Teile teilt, nämlich das Innere des Hohlkörpers und das Äußere des Hohlkörpers. Das Äußere des Hohlkörpers kann innerhalb dieses Dokumentes bevorzugt synonym als Umgebung bezeichnet werden. Bevorzugt bezieht sich geschlossenen über die voranstehende geometrische Bedeutung hinaus auch auf die Durchlässigkeit der äußeren Begrenzungsfläche des Hohlkörpers bezüglich eines Fluids. Ein Fluid kann bevorzugt ein Gas oder eine Flüssigkeit sein, insbesondere kann ein Fluid Luft der Atmosphäre in der Umgebung des Hohlkörpers und in seinem Inneren sein. Geschlossen bedeutet insbesondere in diesem Zusammenhang, dass die äußere Begrenzungsfläche des Hohlkörpers, auch Oberfläche genannt, bezüglich des Fluids undurchlässig ist. Die Durchlässigkeit wird bevorzugt mit der Permeabilität beschrieben, welche in erster Linie den Grad der Durchlässigkeit eines Feststoffes bezüglich eines Fluids beschreibt. Dabei spielt bevorzugt die Diffusion des Fluids durch den Festkörper eine Rolle. Die Diffusion bezeichnet bevorzugt einen ohne äußere Einwirkung eintretenden Ausgleich von Konzentrationsunterschieden eines Fluids. Diese Diffusion durch den Festkörper kann bevorzugt beispielsweise durch Poren oder molekulare Zwischenräume geschehen. Die Permeabilität kann bevorzugt mithilfe der SI-Einheit Perm (ng / (s · m² · Pa, ng steht für Nanogramm, s für Sekunde, m² für Quadratmeter, Pascal für Newton pro Quadratmeter) oder mithilfe der Sauerstofftransmissionsrate (OTR) angegeben werden. OTR ist ein Messwert für die Durchlässigkeit von Sauerstoffmolekülen durch eine Stoffschicht. Zur Ermittlung des OTR-Wertes wird bevorzugt das Gasvolumen der Sauerstoffmoleküle, welche innerhalb von 24 Stunden durch eine Fläche der Schicht diffundieren, bestimmt. Vorliegend wird als bevorzugte Einheit die OTR in cm³/(m²*d) angegeben, wobei die SI-Einheiten cm³ für Kubikzentimeter, also dem Volumen der diffundierten Sauerstoffmoleküle steht, d für Tag, d.h. 24 Stunden, und m² für Quadratmeter, d.h. der Fläche der Schicht stehen. Der Fachmann weiß, wie Perm bzw. OTR von Materialschichten experimentell bestimmbar sind und kann daher die Schichten entsprechend dieser Eigenschaften auswählen.

Es kann beispielsweise bevorzugt sein, dass ein geschlossener Hohlkörper eine OTR von weniger als 10 cm³/(m²*d), besonders bevorzugt weniger als 1 cm³/(m²*d), ganz besonders bevorzugt weniger als 0,1 cm³/(m²*d) und insbesondere weniger als 0,01 cm³/(m²*d) für aufweist. Vorteilhafterweise kann ein geschlossener Hohlkörper eine OTR von ungefähr 0 cm³/(m²*d) aufweisen. Es kann ebenso bevorzugt sein, dass ein geschlossener Hohlkörper eine Permeabilität von weniger als 60 Perm, besonders bevorzugt weniger als 6 Perm, ganz besonders bevorzugt weniger als 0,6 Perm und insbesondere weniger als 0,06 Perm aufweist. Vorteilhafterweise kann ein geschlossener Hohlkörper eine Permeabilität von ungefähr 0 Perm aufweisen. Insbesondere stellt ein geschlossener Hohlkörper bezüglich seiner Permeabilität eine Durchlassbarriere für das Fluid dar, sodass ein Druckunterschied zwischen dem Inneren und der Umgebung des Hohlkörpers über Stunden, bevorzugt über Tage ungefähr konstant bleibt. Es kann diesbezüglich ebenso bevorzugt sein, dass ein Druck im Innern des Hohlkörpers über Stunden, bevorzugt über Tage ungefähr konstant bleibt. Ein Fachmann weiß, welches Material und welche Materialstärke er für die Oberfläche des Hohlkörpers auswählen muss, damit die bevorzugten Eigenschaften erreicht werden können.

Begriffe wie im Wesentlichen, ungefähr, ca., etwa, etc. beschreiben bevorzugt einen Toleranzbereich von weniger als ± 20%, bevorzugt weniger als ± 10%, besonders bevorzugt weniger als ± 5% und insbesondere weniger als ± 1%. Ähnlich beschreibt bevorzugt Größen, die ungefähr gleich sind. Teilweise beschreibt bevorzugt zu mindestens 1 %, besonders bevorzugt zu mindestens 5 %, insbesondere zu mindestens 10 %, in einigen Fällen zu mindestens 20 % oder gar 40 %.

Ein ellipsoider Hohlkörper ist bevorzugt dadurch beschrieben, dass jede ebene Querschnittsfläche des ellipsoiden Hohlkörpers, welche diesen schneidet, entweder eine Ellipse darstellt oder punktförmig ist. Eine Ellipse ist bevorzugt der geometrische Ort aller Punkte einer Ebene, für die die Summe der Abstände zu zwei gegebenen Punkten der gleichen Ebene eine Konstante ist. Ein ellipsoider Hohlkörper kann insbesondere eine Kugel sein. Eine Kugel bietet unter anderem den Vorteil, dass sie die geringste Außenfläche aller Körper für ein gegebenes geschlossenes Volumen aufweist und daher gegenüber anderen geometrischen Formen Gewichtsvorteile bietet.

Der geschlossene, ellipsoide Hohlkörper umfasst bevorzugt mindestens zweiunddreißig Elemente, welche den Hohlkörper im Wesentlichen bilden. Dies heißt bevorzugt, dass die äußere Begrenzungsfläche bzw. Oberfläche des Hohlkörpers im Wesentlichen aus mindestens 32 Elementen besteht. Diese bedeutet vor allem, dass die mindestens 32 Elemente bevorzugt so zusammengesetzt werden können, dass sie im Wesentlichen die Oberfläche des geschlossenen Hohlkörpers bilden. D. h. insbesondere, dass, wenn die mindestens 32 Elemente so zusammengesetzt sind, zwischen ihnen im Wesentlichen kein freier Raum, welcher das Innere des Hohlkörpers mit dem äußeren der Umgebung verbindet, entsteht. Bevorzugt passen die Elemente ähnlich einem Puzzle so zusammen, dass sie die Oberfläche des Hohlkörpers bilden. Die mindestens 32 Elemente können beispielsweise 20 Sechsecke und zwölf Fünfecke sein, welche wie bei einem Fußball zusammengesetzt werden und so den geschlossenen, ellipsoiden Hohlkörper bilden. Dabei weisen die einzelnen Elemente bevorzugt eine Wölbung der Außenfläche auf, welche später durch die äußere Begrenzungsfläche bzw. Oberfläche umfasst ist, um dem gebildeten Hohlkörper im Wesentlichen eine äußere Kugelform zu geben. Diese Fläche soll bevorzugt als Außenfläche der Elemente bezeichnet werden.

Es kann ebenso bevorzugt sein, dass die mindestens 32 Elemente, welche im Wesentlichen den Hohlkörper bilden, den Hohlkörper im Zusammenspiel mit einer gleichen Anzahl an Kappen bilden, welche im Wesentlichen die äußere Begrenzungsfläche des geschlossenen Hohlkörpers bilden. Dabei spielt jedes Element bevorzugt die Rolle einer Rahmenstruktur, auf die die Kappe aufgebracht werden kann. Dies wird untenstehend in diesem Text genauer erläutert werden.

Bevorzugt ist die Anzahl von mindestens 32 Elementen nur eine untere Schranke der Anzahl der Elemente und gibt keinen Hinweis auf die tatsächliche Größenordnung der Anzahl der Elemente. Der Hohlkörper kann bevorzugt ebenso mindestens 100, besonders bevorzugt mindestens 1000, ganz besonders bevorzugt mindestens 10.000 und insbesondere mindestens 100.000 Elemente umfassen. Dabei ist bevorzugt, dass unabhängig von der Anzahl der Elemente immer genau 12 Fünfecke verwendet werden. So können die gewünschten geometrischen Formen besonders einfach und präzise realisiert werden.

Der Hohlkörper kann beispielsweise ca. 500 Elemente umfassen, welche bevorzugt 12 Fünfecke und 480 Sechsecke sind.

Bevorzugt werden aus mathematischen Gründen bei der Verwendung von Fünfecken, insbesondere in Verbindung mit Sechsecken, immer nur 12 dieser Fünfecke verwendet.

Bevorzugt ist der ellipsoide Hohlkörper ungefähr ellipsoid. Da der Hohlkörper aus einer Anzahl von mindestens 32 Elementen besteht, welche bevorzugt eine Wölbung aufweisen, aber auch gerade Außenflächen aufweisen können, bildet die von Ihnen geformte Außenhülle des Hohlkörpers bevorzugt nur ungefähr eine ellipsoide Form nach. Der Hohlkörper kann daher bevorzugt ebenso ein archimedischen Körper sein, bevorzugt ausgewählt aus der Gruppe umfassend Tetraederstumpf, Kuboktaeder, Hexaederstumpf, Oktaederstumpf, Rhombenkuboktaeder, großes Rhombenkuboktaeder, Ikosidodekaeder, Dodekaederstumpf, Ikosaederstumpf, abgeschrägtes Hexaeder oder Cubus simus, Rhombenikosidodekaeder, großes Rhombenikosidodekaeder oder abgeschrägtes Dodekaeder. Diese und ähnliche Formen können bevorzugt als im Wesentlichen ellipsoid bezeichnet werden. Der Körper kann auch im Wesentlichen ein Goldberg Polyhedron sein, wobei die Außenflächen bevorzugt gewölbt sind für eine runde Form. Ein solches Polyhedron hat sich als besonders leicht, einfach herzustellen und stabil erwiesen.

Bevorzugt weisen die einzelnen Elemente nicht nur eine Ausdehnung entlang ihrer Außenfläche auf, sondern bevorzugt auch eine im Wesentlichen senkrecht zu dieser Außenfläche definierte Dicke. Diese Dicke beschreibt bevorzugt den Abstand zwischen der Außenfläche und einer Innenfläche eines Elements, wobei die Innenfläche bevorzugt Teil der inneren Fläche des Hohlkörpers ist, welche das Innere des Körpers nach außen begrenzt. Jedes Element besitzt also bevorzugt eine Außenfläche, eine Innenfläche sowie mindestens eine Seitenfläche, deren Außenkanten bevorzugt durch die Außenkanten der Innenfläche, die Außenkanten der Außenfläche sowie etwaigen Verbindung zwischen korrespondierenden etwaigen Ecken der Innenfläche und der Außenfläche gebildet werden. Eine Seitenfläche ist dabei bevorzugt eine Fläche, welche von Kanten umrandet ist und selber keine Kanten enthält. Es ist dabei bevorzugt, dass Innenfläche und Außenfläche der Elemente im wesentlichen korrespondierende Umrisse aufweisen. Dies bedeutet vor allem, dass die geometrische Grundform der Umrisse von außen- und Innenfläche im Wesentlichen übereinstimmen. Geometrische Grundform bezeichnet bevorzugt die zugrundeliegende zweidimensionale geometrische Form, beispielsweise Ellipse, Kreis, Dreieck, Viereck, Fünfecke, Sechseck, Siebeneck, Achteck, Neuneck, Zehneck etc. Mit im Wesentlichen übereinstimmen ist gemeint, dass beispielsweise sowohl der Umriss sowohl der Innen- als auch der Außenfläche die gleiche geometrische Form aufweisen. Dabei ist weiterhin bevorzugt, dass diese Formen zueinander ausgerichtet sind, das bedeutet vor allem, dass ihre Kanten im Wesentlichen parallel sind. Die Dimensionen sowie die Größenverhältnisse der Form der Umrisse müssen dabei nicht übereinstimmen, ebenso wenig die die exakte Form der Außen- und Innenfläche selber. Die Endpunkte auf gleichen Seiten zueinander paralleler Kanten der Umrisse der außen- und der Innenfläche sind dabei bevorzugt korrespondierende Ecken.

Eine Seitenfläche wird also bevorzugt außen durch die Außenkanten der Innen- und der Außenfläche sowie Verbindung zwischen etwaigen miteinander korrespondierenden Ecken der beiden Flächen gebildet. Die Begrenzungskante der Seitenfläche, welche durch die Außenkante der Außenfläche gebildet wird, heißt dabei bevorzugt Oberkante. Entsprechend heißt die durch die Außenkante der Innenfläche gebildete Begrenzungskante der Seitenfläche Unterkante. Durch Verbindung von Ecken gebildete Kanten der Seitenfläche heißen bevorzugt Seitenkanten.

Die Seitenflächen sind bevorzugt Verbindungsflächen, welche in erster Linie zur Verbindung mit Verbindungsflächen der anderen Elemente dienen. Die direkt benachbarten Verbindungsflächen zweier benachbarter Elemente berühren sich dabei bevorzugt im Wesentlichen über ihre gesamte Fläche. Insbesondere besteht zwischen den beiden Seitenkanten einer Verbindungsfläche eine geschlossene Berührungsfläche zwischen dieser und der benachbarten Verbindungsfläche. Diese ist bevorzugt für die vorstehend genannte Undurchlässigkeit des Hohlkörpers verantwortlich. Eine Verbindung bezeichnet somit bevorzugt eine im Wesentlichen formschlüssigen Kontakt zwischen den Verbindungsflächen, welche undurchlässig im vorstehend genannten Sinne ist.

Dabei sind die Verbindungsflächen bevorzugt im Wesentlichen trapezförmig ausgebildet. Trapezförmig bezeichnet bevorzugt die äußere Form eines Vierecks, welches zwei parallele Seiten aufweist, die bevorzugt Grundseiten genannt werden. Dabei ist bevorzugt, dass es sich um ein gleichschenkliges Trapez handelt, das bedeutet insbesondere, dass beide Seiten, die nicht Grundseiten sind, gleich lang sind. Dabei ist weiterhin bevorzugt, dass das Trapez eine zu einer Seite senkrechte Symmetrieachse besitzt. Ein solches Trapez wird bevorzugt symmetrisches Trapez genannt. Ein solches symmetrisches Trapez ist als Verbindungsfläche des vorstehend definierten Hohlkörpers eine natürliche Wahl, welche sich aus Symmetrieüberlegungen ergibt, sowie der Tatsache, dass die Innenfläche des Hohlkörpers kleiner ist als dessen Oberfläche. Daher ist es auch bevorzugt, dass die Seite des Trapezes, welche eine Unterkante der Verbindungsfläche ist, eine kurze Seite des Trapezes ist.

Sollen die Verbindungsflächen zur Verbindung mit Verbindungsflächen der anderen Elemente dienen und sich zu einem Hohlkörper passgenau zusammenfügen, ist das Trapez eine ideale Wahl, welche sich durch eine besondere Effizienz bezüglich der Undurchlässigkeit und der Stabilität auszeichnet. Trapezförmige Verbindungsflächen sorgen für einen äußerst stabilen, druckdichten, geschlossenen Hohlkörper, der gleichzeitig sehr leicht ist. Insbesondere ist diese Trapezform durch den römischen Bogen inspiriert. Der römischen Bogen kommt ohne typische Verbindungstechniken aus und hält allein auf Grund des auf den Verbindungsflächen der Steine wirkenden Drucks, welcher seinen Ursprung in der Gewichtskraft der Steine hat, zusammen. Der römische Bogen trägt der Tatsache Rechnung, dass jegliches Mauerwerk hohe Druckfestigkeiten, jedoch keine Zugfestigkeiten aufweist. Will man beispielsweise einen nach oben entgegen der Schwerkraft geschlossenen Durchgang innerhalb eines Mauerwerks konstruieren, kann diese Tatsache ein Problem darstellen. Baut man jedoch diesen Durchgang in Form eines Bogens auf, der entlang seiner Stützlinie verläuft und im Wesentlichen aus passgenau miteinander in Verbindung stehenden, etwa trapez- oder keilförmigen bzw. konischen Elementen besteht, kommt es innerhalb des Bogens nur zur Druckspannung zwischen der Elementen untereinander, welche im Wesentlichen senkrecht zu den Verbindungsflächen der Elemente verlaufen. Als Stützlinie bezeichnet man dabei bevorzugt die Linie, auf welche die aus der Belastung resultierenden, effektiven Kräfte verlaufen. Dieses dem Fachmann bekannte Konzept des römischen Bogens findet auch bei dem Hohlkörper Anwendung. Die aus der Belastung resultierenden Kräfte resultieren dabei allerdings nicht im Wesentlichen aus der Schwerkraft, sondern aus dem bevorzugt auf der Oberfläche lastenden Druck der Umgebung, welcher aufgrund einer Druckdifferenz mit dem inneren des Hohlkörpers nicht kompensiert wird. Dies wird untenstehend weiter ausgeführt. Daher ist diese Bauweise, bevorzugt mit einer möglichst hohen Zahl von Elementen, besonders geeignet, einem Knicken der Struktur (sogenanntes "Buckling") entgegenzuwirken.

Die Bauweise des römischen Bogens bietet darüber hinaus den Vorteil, dass ein guter Kompromiss gefunden werden kann zwischen einer guten Stabilität und einer zu hohen Anzahl von Bauteilen, welche den Aufbau verkomplizieren. Insbesondere müssen bei der Bauweise des römischen Bogens die Elemente nicht miteinander wirkverbunden werden und die Präzision an die Fertigung der einzelnen Elemente ist nicht zu hoch. Die Herstellung ist somit einfach und kostengünstig. Es können dabei auch große Hohlkörper stabil gebaut werden, ohne dass die einzelnen Elemente sehr klein werden, was die Fertigung und den Zusammenbau erschweren würde.

Bevorzugt sind die Elemente hohl, d. h. bevorzugt, dass jedes Element im Wesentlichen aus Außenfläche, Innenfläche und Verbindungsflächen besteht. Diese Flächen weisen jeweils eine bestimmte Dicke auf, die bevorzugt an die konkrete Ausgestaltung des Hohlkörpers sowie anders verwendete Material angepasst wird. Solche hohlen Elemente weisen sowohl Gewichts- als auch Stabilitätsvorteile auf, ein Knicken (Buckling) des Hohlkörpers kann verhindert werden.

Der Hohlkörper ist bevorzugt druckdicht ausgebildet, d. h., dass insbesondere eine Druckdifferenz zwischen dem inneren und der Umgebung des Körpers und/oder ein Druck im Innern des Körpers über Stunden, bevorzugt über Tage ungefähr konstant gehalten werden kann. Dies kann vor allem dadurch erzielt werden, dass der Hohlkörper geschlossen ist und eine vorstehend beschriebene Undurchlässigkeit aufweist.

Im Inneren des Hohlkörpers liegt ein erster Druck vor, d. h. beispielsweise, dass im Innern des Hohlkörpers ein Fluid vorhanden ist. Druck ist bevorzugt definiert als eine auf eine Fläche ausgeübte Kraft. Druck hat bevorzugt die dem Fachmann bekannte Einheit Pascal (N/m²) bzw. bar (1x10⁵ Pa). Ein Fluid, insbesondere ein Gas, übt Druck bevorzugt aus durch Impulsübertragung bei Zusammenstößen seiner Bestandteile mit der Fläche, auf die Druck ausgeübt wird. Der Druck hängt daher bevorzugt von der kinetischen Energie des Gases und somit von seiner Temperatur ab sowie von der Anzahl der Gasteilchen, da eine höhere Anzahl von Gasteilchen über einen Zeitraum gemittelt auch einen höheren Impuls übertragen können. Somit ist der Druck im Inneren des Hohlkörpers insbesondere ein Indikator für die Anzahl der Fluidbestandteile innerhalb des Körpers. Dabei wird bevorzugt davon ausgegangen, dass sich innerhalb des Körpers ein Gleichgewicht eingestellt hat und der Druck innerhalb des Körpers in jedem Punkt im Wesentlichen identisch ist. Der Druck im Innern ist vorliegend insbesondere bedeutsam ür zwei zur Beschreibung des Körpers wesentlicher Eigenschaften:
1. die Anzahl der Fluidteilchen im Innern des Hohlkörpers, welche für die Dichte bzw. Masse des Fluids im Innern de Hohlkörpers bedeutsam sind;
2. der vom Fluid im Innern des Hohlkörpers auf die innere Fläche des Hohlkörpers ausgeübte Druck.

Die Bedeutung dieser beiden Eigenschaften wird untenstehend genauer erläutert werden.

Außerhalb bzw. in der Umgebung des Hohlkörpers liegt ein zweiter Druck vor. Der Druck außerhalb des Hohlkörpers ist bevorzugt so definiert wie der Druck im Innern des Hohlkörpers. Auch dieser Druck ist bedeutsam für die Anzahl der Fluidteilchen pro Volumenanteil in der Umgebung des Hohlkörpers, somit insbesondere für die Dichte des Fluids in der Umgebung des Hohlkörpers. Des Weiteren spielt dieser Druck eine entscheidende Rolle für den auf die Außenfläche des Hohlkörpers ausgeübten Druck und ist bevorzugt mit diesem identisch. Bevorzugt ist das Fluid im Innern des Hohlkörpers mit dem außerhalb des Hohlkörpers im Wesentlichen identisch. Es kann auch bevorzugt sein, dass innerhalb und außerhalb unterschiedliche Fluide vorhanden sind. Es ist bevorzugt, dass sowohl das Fluid im Innern des Körpers als auch außerhalb Luft ist. Luft ist in erster Linie das als solches bekannte Gasgemisch, welches die dem Fachmann bekannte Zusammensetzung im Rahmen der natürlich vorkommenden Schwankungen aufweist. Insbesondere der Anteil von Wasserdampf kann bevorzugt zwischen 0,1 % und 3 % schwanken. Hier ist bevorzugt der Volumenanteil von Wasserdampf am gesamten Luftvolumen gemeint und nicht die relative Luftfeuchtigkeit. Sowohl der Druck im Innern des Hohlkörpers als auch außerhalb kann vorteilhafterweise jeden physikalisch möglichen Wert annehmen. Dabei ist bevorzugt, dass der Druck im Inneren des Hohlkörpers kleiner ist als der Druck außerhalb des Hohlkörpers. Insbesondere ist bevorzugt, dass der Druck im Inneren des Körpers sehr klein ist. Bevorzugt ist der Druck im Innern des Hohlkörpers kleiner als 300 hPa (hPa bedeutet Hektopascal, entspricht 100 Pa), besonders bevorzugt 100 Pa bis 0,1 Pa, ganz besonders bevorzugt 0,1 Pa bis 10⁵ Pa und insbesondere 10⁻⁵ Pa bis 10⁻¹⁰ Pascal. Besonders bevorzugt ist der Druck im Innern des Hohlkörpers ein Vakuum.

Ein Außendruck beträgt bevorzugt zwischen 1100 hPa und 100 hPa.

Es kann ebenso bevorzugt sein, dass ein Innendruck zwischen 1100 hPa und 100 hPa und ein Außendruck mindestens um einen Faktor zwei größer ist als ein Innendruck.

Durch den Druckunterschied zwischen dem Inneren des Hohlkörpers und der Umgebung ist insbesondere der Druck auf die Außenfläche größer als der von innen wirkende Druck auf die innere Fläche des Hohlkörpers. Dieser Druckunterschied verleiht dem Hohlkörper bevorzugt seine Stabilität, er wird von dem äußeren Druck zusammengedrückt und - gehalten. Aufgrund der Bauweise der Elemente mit trapezförmigen Verbindungsflächen sind die Elemente bevorzugt auf eine Weise formschlüssig miteinander verbunden, die der vom Außendruck vermittelten Kraft entgegenwirkt und so Stabilität verursacht. Ähnlich einer Magdeburger Halbkugel wird durch den Außendruck eine Kraft zwischen den Elementen in etwa senkrecht zu den Verbindungsflächen ausgeübt, womit dem Hohlkörper eine außerordentliche Stabilität verliehen wird. Ähnlich einem römischen Bogen wird die normal zur Außenfläche wirkende Kraft aufgrund der Bauweise und der trapezförmigen Verbindungsflächen in zwischen den Elementen wirkende Druck- und Schubkräfte umgewandelt, welche in etwa senkrecht zu den Verbindungsflächen und innerhalb der durch die Elemente gebildete Außenhülle des Hohlkörpers verlaufen. Daher spielt für die Stabilität im Wesentlichen bevorzugt die Komprimierbarkeit bzw. die Druckfestigkeit der Elemente eine Rolle. Die beschriebene Wirkung hat des Weiteren den Vorteil, dass dadurch, dass die Elemente gegeneinander gedrückt werden die Permeabilität zwischen den Elementen verringert wird. Außerdem wird die Festigkeit erhöht.

Bevorzugt sind die Verbindungsflächen der Elemente weder vernäht noch werden sonstige Befestigungsmittel zur Verbindung verwendet. Die Elemente werden bevorzugt durch den äußeren Druck zusammengehalten und der Hohlkörper ist bevorzugt selbsttragend.

Aufgrund des geringeren Drucks im Inneren des Hohlkörpers im Vergleich zum Äußeren des Hohlkörpers ist bevorzugt die Dichte des Fluids im Innern des Hohlkörpers geringer als außerhalb. Wenn der Dichteunterschied groß genug ist und die durch die Elemente gebildete Außenhülle des Hohlkörpers leicht ist, kann erreicht werden, dass die Masse des vom Hohlkörper aufgrund seines Volumens verdrängten Fluids größer ist als die Masse des Hohlkörpers. Somit kann bevorzugt Auftrieb erzeugt werden und der Luftkörper schwebt bzw. steigt nach oben.

Es kann bevorzugt sein das der Hohlkörper beispielsweise über ein Ventil verfügt und so vorzugsweise mit einer geeigneten Pumpe, insbesondere einer Vakuumpumpe "leer" gepumpt wird. So kann beispielsweise auch der Auftrieb reguliert werden. Auch zur Herstellung des Hohlkörpers kann mit so einer Pumpe gearbeitet werden. Während einer ersten Phase der Herstellung des Hohlkörpers können die Elemente durch eine geeignete Stützstruktur zusammengehalten werden, bis der Druckunterschied zwischen dem äußeren und dem Inneren des Hohlkörpers ausreicht, um diesen stabil zusammenzudrücken.

Es kann ebenso bevorzugt sein, dass zum Erreichen des gewünschten Drucks im Innern des Hohlkörpers sowie für die gewünschte Permeabilität ein fortwährender Pumpprozess, beispielsweise einer Vakuumpumpe verwendet wird.

In einer bevorzugten Ausführungsform des Hohlkörpers kann das äußere Fluid auch Wasser sein und das Innere Fluid Luft, sodass der Hohlkörper ein Tauchkörper darstellt, beispielsweise ein U-Boot, welches durch den Wasserdruck zusammengehalten wird. Dabei können die Elemente für eine bessere Sicht nach draußen in das umgebende Wasser beispielsweise aus transparentem Material, wie etwa Glas sein.

Es war überraschend, dass auf diese Weise kann ein Auftriebskörper, beispielsweise für die Verwendung bei einem Luftschiff, geschaffen werden kann, welcher ohne zusätzliche Verbindungsmittel zwischen den von ihm umfassten Elementen eine überraschend hohe Stabilität aufweist und ohne die Verwendung gefährlicher und unter Umständen seltener Gase wie Wasserstoff oder Helium auskommt.

Der erfinderische Hohlkörper ist einfach zu bauen, jedoch auch schon in der (theoretischen) Konstruktionsphase einfach zu kalkulieren und zu berechnen.

In einer bevorzugten Ausführungsform ist der erste Druck im Inneren des Hohlkörpers kleiner als der zweite Druck außerhalb des Hohlkörpers. So kann besonders effizient die Stabilität des Hohlkörpers ohne spezielle Verbindungsmittel zwischen den Elementen erreicht werden. Außerdem erfährt ein solcher Hohlkörper bevorzugt Auftrieb, vor allem in dem Fall, in dem sowohl Innen als auch Außen das gleiche Fluid vorliegt bzw. zwei verschiedene Fluide mit ähnlicher Dichte.

In einer bevorzugten Ausführungsform sind die Elemente Fünfecke und/oder Sechsecke. Fünfecke bzw. Sechsecke beschreiben bevorzugt die Umrissform der Außenfläche bzw. Innenfläche der Elemente.

In einer bevorzugten Ausführungsform weisen die Elemente, bevorzugt deren Umrissform, mindestens drei Ecken aufweisen, wobei die Elemente bevorzugt Dreiecke und insbesondere Fünfecke und/oder Sechsecke sind. Vor allem Dreiecke haben sich zur Konstruktion eines einfachen, stabilen und leichten Hohlkörpers als besonders geeignet erwiesen.

So kann beispielsweise ein stabiler Hohlkörper aus 20 Sechsecken und zwölf Fünfecken, geometrisch ähnlich einem Fußball, erzeugt werden. Es kann jedoch auch ein anderer archimedischer Körper eine Vielzahl von Fünf- und Sechsecken, beispielsweise ca. 12 Fünfecken und etwa mehrere tausend Sechsecke, umfassen. Überraschenderweise sind insbesondere 5- und Sechsecke als Elemente besonders geeignet und bilden aufgrund ihrer geometrischen Form besonders stabile und leichte Hohlkörper. Die Kräfteverteilung zwischen den Elementen ist auf diese Weise ebenfalls besonders günstig.

Wie vorstehend beschrieben, weisen die Außenflächen der Elemente bevorzugt eine Wölbung auf, um dem Hohlkörper eine ellipsoide, insbesondere eine kugelförmige Form zu verleihen. Die Innenfläche weist bevorzugt ein kreisförmiges Loch auf, sodass die Innenfläche nicht geschlossen ist. Es war äußerst überraschend, dass auf diese Weise leichte und gleichzeitig äußerst stabile Elemente geschaffen werden konnten. Dementsprechend ist auch der ganze Hohlkörper überraschend leicht und stabil. Insbesondere bezüglich der Stabilität haben sich synergistische Effekte gezeigt, sodass die Stabilität des gesamten Hohlkörpers größer war, als es die Stabilität der einzelnen Elemente erwarten ließ.

Es kann auch bevorzugt sein, dass die Elemente ausgewählt sind aus der Gruppe Dreiecke, Quadrate, Achtecke und/oder Zehnecke. Diese Formen können bei bestimmten Anwendung ebenfalls vorteilhaft sein und besonders leicht zu verarbeiten sein.

In einer bevorzugten Ausführungsform sind die Elemente Doppelwände aus zwei miteinander wirkverbundenen Flächen. Dabei ist jede Wand der Doppelwand bevorzugt jeweils eine Innenfläche und eine Außenfläche eines Elements. Diese werden vorteilhafterweise über die Verbindungsflächen miteinander wirkverbundenen. Wirkverbundenen bedeutet bevorzugt, dass die Wände miteinander verbunden werden. Wirkverbundenen bedeutet insbesondere, dass die Wände darüber hinaus auf Abstand gehalten werden. Bevorzugt werden durch diese Ausführungsform hohle Elemente gebildet. Dabei kann es bevorzugt sein, dass die Innenwand, wie vorstehend beschrieben, ein Loch aufweisen.

Elemente, die diese Weise gebildet werden, sind leicht und stabil und lassen sich überraschend einfach und kostengünstig herstellen.

In einer bevorzugten Ausführungsform besteht jedes Element im Wesentlichen aus den Verbindungsflächen. Dies bedeutet bevorzugt, dass die Elemente im Wesentlichen keine Außen- und Innenflächen aufweisen, außer bevorzugt den inneren bzw. äußeren Kanten der Verbindungsflächen. Um dem Hohlkörper eine Außenfläche zugeben und somit einen geschlossenen Hohlkörper mit einer undurchlässigen Außenfläche zu bilden, kann bevorzugt eine Kappe oder eine folienartige Bespannung außen auf die Elemente aufgebracht werden. Diese Ausführungsform ist besonders leicht und weist einen dementsprechend großen Auftrieb auf.

In einer weiteren Vorzugsvariante werden die Verbindungsflächen eines jeden dieser Elemente mit einer druckdichten Kappe verbunden. Diese Kappe bildet bevorzugt die Außenfläche eines jeden Elements, so das der Hohlkörper geschlossen ist. Die Kappe kann aus dem gleichen oder einem anderen Material bestehen als das Element. Bevorzugt wird die Kappe auf das Element aufgesteckt. Um die Kappe mit dem Element stabil zu verbinden, ist vor allem eine formschlüssige Verbindung zwischen Kappe und Element nötig, welche verhindert, dass bei einer von außerhalb des Hohlkörpers auf die Kappe wirkende Kraft (bzw. einem einwirkenden Druck) die Kappe sich in Bezug zu dem Element bewegen kann. Ein Fachmann weiß, wie er eine solche formschlüssige Verbindung konstruieren muss. Ein auf diese Weise mithilfe Element verbundene Kappe weist eine überraschend stabile Verbindung auf. Diese Vorzugsvariante bietet den Vorteil, dass die Elemente und die Kappen aus unterschiedlichen Materialien und/oder Materialstärken bestehen können und so gemäß den auf sie wirkenden Kräften individuell besonders gut angepasst werden können. Daher kann somit eine besonders leichte Konstruktion realisiert werden.

In einer bevorzugten Ausführungsform ist der Hohlkörper dadurch gekennzeichnet, dass das Material der Elemente und/oder der Kappen eine Druckfestigkeit zwischen 1 GPa und 10 GPa, bevorzugt zwischen 2,5 GPa und 4 GPa, aufweist. Die Druckfestigkeit bezeichnet insbesondere die Widerstandsfähigkeit eines Werkstoffs bei der Einwirkung von Druckkräften. Sie wird bevorzugt definiert als die pro Fläche eines Materials wirkende Druckkraft, bei der das Material einen Bruch erleidet. Die bevorzugte Einheit der Druckfestigkeit ist Pascal bzw. Gigapascal (GPa, entspricht 10⁹ Pa). Ein Fachmann weiß, wie er routinemäßig Druckfestigkeiten verschiedener Materialien aus entsprechenden Eigenschaftslisten feststellen kann und so geeignete Materialien auswählen kann.

Da die Elemente des Hohlkörpers untereinander gegenseitigen Druck ausüben und somit zusammengedrückt werden, ist die Druckfestigkeit eine entscheidende Größe für die Stabilität und Bruchfestgkeit des Hohlkörpers. Auch die bevorzugten Kappen erfahren einen Druck, der sich insbesondere durch die Differenz zwischen dem Druck außerhalb und innerhalb des Hohlkörpers ergibt, des Weiteren werden die Kappen aufgrund der formschlüssigen Verbindung mit den Elementen gegen diese gedrückt.

Überraschenderweise kann durch die genannten Druckfestigkeiten eine besonders dünne Materialstärke gewählt werden, sodass der Hohlkörper besonders leicht ist und einen starken Auftrieb erfährt. Auch bei bestimmten Anwendung des Hohlkörpers, beispielsweise unter der Wasseroberfläche, wobei das Innere des Hohlkörpers mit Luft gefüllt ist, kann auch bei großen Tauchtiefen des Hohlkörpers die Stabilität und Bruchfestigkeit so gewährleistet werden.

In einer bevorzugten Ausführungsform weist das Material der Elemente und/oder der Kappen eine Zugfestigkeit zwischen 0,1 GPa und 6 GPa, bevorzugt zwischen 3 GPa und 5 GPa und/oder ein E-Modul zwischen 100 GPa und 600 GPa, bevorzugt zwischen 200 GPa und 450 GPa, auf. Die Zugfestigkeit bezeichnet insbesondere die Widerstandsfähigkeit eines Werkstoffs bei der Einwirkung von Zugkräften. Sie wird bevorzugt definiert als die pro Fläche eines Materials wirkende Zugkraft, bei der das Material einen Bruch erleidet. Die bevorzugte Einheit der Zugfestigkeit ist ebenfalls Pascal bzw. Gigapascal (GPa, entspricht 10⁹ Pa). Das E-Modul bzw. Elastizitätsmodul beschreibt bevorzugt den Zusammenhang zwischen der auf ein Material ausgeübten Spannung und dessen Verformung. Auch das E-Modul wird vorteilhafterweise in Pascal bzw. Gigapascal gemessen. Es war überraschend, dass auch das E-Modul und die Zugfestigkeit der Elemente und/oder Kappen für die Robustheit und den Zusammenhalt des Hohlkörpers eine wesentliche Rolle spielen und die genannten Bereiche sich dabei als besonders vorteilhaft erwiesen haben.

In einer bevorzugten Ausführungsform weist das Material der Elemente und/oder der Kappen eine Dichte zwischen 1 g/cm³ und 5 g/cm³ auf. Die Dichte oder Massendichte eines Materials beschreibt bevorzugt das Gewicht des Materials pro Volumen.

Es ist nicht überraschend, dass das Material der Elemente und/oder eine geringere Dichte aufweisen sollte, um einen leichten und auftriebsfähigen Hohlkörper zu bilden. Es war jedoch überraschend, dass Materialien in den genannten Bereich nicht nur geeignet sind, einen leichten Hohlkörper zu bilden, sondern auch bei der Erstellung des Hohlkörpers besonders leicht zu handhaben sind. Es hat sich insbesondere herausgestellt, dass Materialien mit einer Dichte von weniger als 1 g/cm³ bei der Verarbeitung zu Schwierigkeiten führen, beispielsweise dadurch, dass sie beim Zusammensetzen der Elemente, bevor ein Druckunterschied zwischen dem Inneren und dem Äußeren des Hohlkörpers hergestellt wird, leicht verrutschen.

In einer bevorzugten Ausführungsform umfassen die Elemente und/oder Kappen Aluminiumoxid. Aluminiumoxid hat sich als besonders geeignet herausgestellt, den vorstehenden genannten Anforderungskatalog an das von den Elementen und/oder Kappen umfassten Materials zu erfüllen. Aluminiunioxid weist bevorzugt eine Dichte von etwa 4 g/Kubikzentimeter auf, sowie ein E-Modul von bevorzugt etwa 350 bis 410 GPa, außerdem eine Druckfestigkeit im Bereich von etwa 2,5 bis 4 GPa. Es war überraschend, dass ein Material gefunden werden konnte, welches all diese idealen Eigenschaften vereint. Überraschenderweise ist Aluminiumoxid darüber hinaus besonders feuerfest, was die Sicherheit erhöht und insbesondere für eine Verwendung des Hohlkörpers als Auftriebskörper für ein Luftschiff Vorteile bietet.

Es kann ebenso bevorzugt sein, dass die Elemente und/oder Kappen Bornitrid umfassen. Bornitrid bezeichnet bevorzugt kubisch kristallines Bornitrid, welches besonders hart ist und gleichzeitig eine relativ geringe Dichte zwischen 3 und 4 g/cm³ aufweist. Daher ist es für die Verwendung zum Bau des Hohlkörpers besonders geeignet.

Auch Graphen kommtaufgrund seiner Eigenschaften ebenso wie Aluminiumoxid und Bornitrid infrage.

In einer bevorzugten Ausführungsform umfassen die Elemente und/oder Kappen Kohlenstofffasern, bevorzugt UMS-Kohlenstofffasern.

Kohlenstofffasern bzw. Carbonfasern sind bevorzugt industriell hergestellte Fasern aus kohlenstoffhaltigen Ausgangsmaterialien, welche durch eine entsprechend des jeweiligen Ausgangsmaterials angepasste chemische Reaktionen in graphitartig angeordneten Kohlenstoff umgewandelt werden. Unter graphitartig angeordnet versteht man bevorzugt eine Anordnung der beteiligten Kohlenstoffatome in einer Kristallstruktur von im Wesentlichen hexagonaler und/oder trigonaler Symmetrie. Bevorzugt sind die Kohlenstofffasern eingebettet in einem Faser-Kunststoffverbund und bilden so einen faserverstärkten Kunststoff. Die Kohlenstofffasern können dabei bevorzugt isotrop und/oder anisotrop angeordnet werden. Anisotrop bedeutet, dass die Fasern innerhalb des Kunststoffes ohne Vorzugsrichtung angeordnet werden. Isotrop bedeutet, dass die Anordnung der Faser innerhalb des Kunststoffes eine Vorzugsrichtung hat. Insbesondere entlang solch einer Vorzugsrichtung, welche bevorzugt die axialer Richtung entlang der angeordneten Faser bezeichnet, zeigt das Material hohe Festigkeiten und Steifigkeiten. Insbesondere könnten Kohlenstofffasern bevorzugt hohe E-Module erzielen. UMS Fasern sind bevorzugt Fasern mit einem besonders hohen E-Modul und/oder einer besonders hohen Zugfestigkeit. UMS steht dabei bevorzugt für Ultra Modulus Strength. Kohlenstofffasern, insbesondere UMS Fasern erreichen dabei Zugfestigkeiten von 3,5 bis 4,5 GPa und E Module von 2 bis 4 GPa. Gleichzeitig weisen Kohlenstofffasern eine geringe Dichte von ca. 1,8 g/cm³ auf. Aufgrund der vorgenannten Werte, insbesondere der mechanischen Werte und des geringen Gewichts, sind Kohlenstofffasern, insbesondere UMS Fasern, für die Herstellung der Elemente und/oder Kappen besonders geeignet. Des Weiteren können die Festigkeiten und E Module sehr spezifisch an die Richtung der Druck- und Zugbelastungen sowie der Kompression der Elemente und/oder Kappen angepasst werden, indem die Vorzugsrichtung der Kohlenstofffasern sich an diesen Belastungen orientiert.

Hohlkörper nach einem oder mehreren der vorigen Ansprüche, wobei die Elemente und/oder Kappen an ihren Verbundstellen Abdichtungen aufweisen. Eine Abdichtung ist bevorzugt ein leicht elastisches Material, welches beispielsweise Unebenheiten an den Verbundstellen, bevorzugt also an den Verbindungsflächen, ausgleichen kann so die Durchlässigkeit des Körpers verringert. Des Weiteren werden Abdichtungen insbesondere durch den Druck, den die Elemente und/oder Kappen aufeinander ausüben, komprimiert. Dadurch kann die Durchlässigkeit oder Permeabilität des Hohlkörpers bevorzugt verringert werden. Eine Abdichtung besteht bevorzugt aus einem Elastomer, bevorzugt ein formfester, jedoch elastischer Kunststoff. Ein Elastomer kann beispielsweise aus Naturkautschuk oder Silikonkautschuk hergestellt werden. Bevorzugt ist die Abdichtung eine Vakuumdichtung. Die Abdichtung ist bevorzugt hergestellt aus einem Material ausgewählt aus der Gruppe umfassend Acrylnitril-Butadien-Kautschuk, Fluor-Kautschuk, Perfluor-Kautschuk, Polytetrafluorethylen und/oder Methyl-Vinil-Silicon-Kautschuk. Durch die Verwendung einer Abdichtung kann ein besonders geschlossener Hohlkörper mit einer geringen Permeabilität bereitgestellt werden. Ein innerhalb des Hohlkörpers erzeugter Druck kann so über besonders lange Zeit konstant gehalten werden, was der Stabilität und dem Auftrieb des Hohlkörpers zuträglich ist.

In einer bevorzugten Ausführungsform ist der Hohlkörper von einer Membran umgeben. Eine Membran ist bevorzugt eine dünne Schicht eines Materials, welche gleichzeitig mechanisch stabil, jedoch flexibel ist. Es kann bevorzugt sein, dass die Membran ebenfalls elastisch ist. Bevorzugt liegt die Membran eng an der Außenfläche des Hohlkörpers an. Die Membran kann dazu genutzt werden, während des Zusammensetzens der Elemente, noch bevor ein Druckunterschied zwischen dem inneren und dem äußeren des Hohlkörpers etabliert ist, die Stabilität zu gewährleisten. Die Membran kann aber auch die Stabilität des fertigen Hohlkörpers erhöhen. Die Membran kann beispielsweise als zusätzliches Sicherheitselement zur Gewährleistung eines stabilen Hohlkörpers gesehen werden. Es ist bevorzugt, dass die Membran aus einem Material mit einer geringen Dichte gefertigt ist. Beispielsweise kann die Dichte zwischen 1 und 4 g/cm³ betragen. Die Membran kann beispielsweise aus einem Elastomer gefertigt werden. Es kann ebenso bevorzugt sein, dass die Membran Kohlenstofffasern umfasst. Es war überraschend, dass durch eine solche Membran die Stabilität des Hohlkörpers entscheidend verbessert werden konnte. Dabei wird die Stabilität auf synergistische Weise erhöht, da sie größer ist, als allein durch die einzelnen Stabilitäten des Hohlkörpers und der Membran zu erwarten gewesen wäre. Insbesondere bei der Verwendung des Hohlkörpers für ein Luftschiff kann die Sicherheit des Luftschiffs dadurch überraschend verbessert werden.

In einer weiteren Vorzugsvariante der Membran ist diese druckdicht. Druckdicht bedeutet bevorzugt eine Durchlässigkeit oder Permeabilität wie vorstehend in diesem Dokument beschrieben. Durch diese Vorzugsvariante können eventuell Lecks in der Außenhülle des Hohlkörpers abgedichtet werden. Diese Vorzugsvariante sollte die Membran insbesondere sehr eng an der Außenhülle anliegen und elastisch sein und bevorzugt einen Druck auf die Außenhülle ausüben. So kann auch bei einer druckdichten Membran gewährleistet werden, dass der Druck außerhalb des Hohlkörpers auf diesen übertragen wird und so die Stabilität des Hohlkörpers gesichert ist. Eine solche Membran kann den Zusammenhalt der Elemente des Hohlkörpers verbessern und absichern, dass im Innern des Hohlkörpers ein konstanter Druck herrscht.

In einem weiteren Aspekt betrifft die Erfindung ein Luftschiff umfassend einen Auftriebskörper, wobei der vorstehend beschriebene Hohlkörper den Auftriebskörper bildet. Ein Luftschiff besteht vor allem aus einem typischerweise in Flugrichtung des Luftschiffs aerodynamisch geformten Auftriebskörper, der für den Auftrieb sorgt. Das bedeutet bevorzugt, dass die Masse der vom Auftriebskörper verdrängten Luft größer ist als das Gewicht des gesamten Luftschiffs samt Traglast. An dem Auftriebskörper ist bevorzugt mindestens eine Gondel befestigt. Diese Gondel bietet beispielsweise Platz für die Besatzung, insbesondere für den Piloten, für Passagiere, etwaiges Frachtgut und Steuerungselemente und weitere benötigte Ausrüstungsgegenstände. Mindestens ein Triebwerk sorgt vorteilhafterweise für eine Vortriebskraft in Flugrichtung. Es ist bevorzugt ein Leitwerk zur Steuerung des Luftschiffs vorhanden.

Luftschiffe können besonders ruhig und mit geringen Geschwindigkeiten fliegen und dabei auch durch den geringen Energieverbrauch lange in der Luft bleiben. Luftschiffe eignen sich als Werbeträger, für Rundflüge touristischer Art, zur Überwachung aus der Luft, für Forschungsaufgaben, zu militärischen Zwecken und zum Transport. Der vorstehend beschriebene Hohlkörper kann dabei einen besonders geeigneten Auftriebskörper bereitstellen. Ein Auftriebskörper, welcher ein Vakuum enthält, ist eine Realisierung eines lange gehegten Menschheitstraums und dürfte nicht zuletzt deswegen eine große Faszination ausüben, welche ein solches Luftschiff auch für touristische Zwecke geeignet erscheinen lässt.

Der durchschnittliche Fachmann erkennt, dass technische Merkmale, Definitionen und Vorteile bevorzugter Ausführungsformen des erfindungsgemäßen Hohlkörpers auch für das erfindungsgemäße Luftschiff gelten.

In einer bevorzugten Ausführungsform umfasst das Luftschiff einen Auftriebskörper, wobei mehrere Hohlkörper zum Auftriebskörper zusammengefasst werden. Um den Auftrieb weiter zu erhöhen, kann bevorzugt sein, mehrere Hohlkörper zu einem Auftriebskörper zusammenzufassen. So kann ein besonders leistungsstarkes Luftschiff bereitgestellt werden. Ebenso kann durch Redundanz von Auftriebskörpern die Sicherheit erhöht werden.

In einem weiteren Aspekt betrifft die Erfindung ein Verfahren zur Verwendung des vorstehend beschriebenen Hohlkörpers als Auftriebskörper für ein Luftschiff, wobei
- Elemente zu einem Hohlkörper zusammengefügt werden,
- ein Vakuum im Inneren des Hohlkörpers erzeugt wird.

Der durchschnittliche Fachmann erkennt, dass technische Merkmale, Definitionen und Vorteile bevorzugter Ausführungsformen des erfindungsgemäßen Hohlkörpers auch für das erfindungsgemäße Verfahren gelten.

Dieser Aspekt betrifft die Herstellung des Hohlkörpers als Auftriebskörper. Die Erzeugung eines Vakuums im Innern des Hohlkörpers ist dafür verantwortlich, dass Auftrieb generiert werden kann. Vakuum beschreibt bevorzugt einen Druck im Innern des Hohlkörpers kleiner als 300 hPa (hPa bedeutet Hektopascal, entspricht 100 Pa), besonders bevorzugt 100 Pa bis 0,1 Pa, ganz besonders bevorzugt 0,1 Pa bis 10⁵ Pa und insbesondere 10⁻⁵ Pa bis 10⁻¹⁰ Pascal. Der Außendruck ist dabei der Luftdruck der den Hohlkörper umgebenden Atmosphäre. Bevor ein Vakuum in Innern des Hohlkörpers erzeugt werden kann, werden bevorzugt zunächst einmal die Elemente zum Hohlkörper zusammengefügt. Ein Fachmann weiß, wie er dies routinemäßig bewerkstelligen kann. Die Elemente können beim Zusammensetzen beispielsweise durch eine Haltekonstruktion an der jeweiligen Position innerhalb der Außenhülle des Hohlkörpers fixiert werden, bis der ganze Hohlkörper entstanden ist und ein Vakuum erzeugt werden kann. Mit der Erzeugung des Vakuums entsteht konstruktionsbedingt durch den Unterschied zwischen Außendruck und Innendruck Stabilität.

Zur Erzeugung des Vakuums werden bevorzugt Fluidteilchen, insbesondere Luftmoleküle, vom Inneren des Hohlkörpers in das äußere verbracht. Hierfür sollte bevorzugt eine dafür vorgesehene Öffnung, beispielsweise ein Ventil, vorhanden sein. Die Öffnung sollte insbesondere nach Erzeugung des Vakuums druckdicht verschließbar sein, damit der geschlossene Hohlkörper entsteht. Es können beispielsweise spezielle Vakuumventile verwendet werden. Diese bestehen bevorzugt aus einer beweglichen Platte innerhalb einer passenden Vorrichtung mit mindestens einer Dichtung. Es können beispielsweise Eckventile, Durchgangsventile oder Gaseinlassventile verwendet werden. Zur Erzeugung des Vakuums wird bevorzugt eine Vakuumpumpe verwendet. Dabei können bevorzugt Gastransferpumpen wie beispielsweise Membranpumpen, Hubkolbenvakuumpumpen, Drehschieberpumpen, Sperrschiebervakuumpumpen, Wälzkolbenpumpen, Schraubenvakuumpumpen, Molekularpumpen, Turbomolekularpumpen oder auch Flüssigkeitsstrahlpumpen zum Einsatz kommen. Ebenso können gasbindende Vakuumpumpen, wie beispielsweise Getterpumpen, Kryopumpen oder Adsorptionspumpen verwendet werden. Bei der Verwendung eines Hohlkörpers als Auftriebskörper für ein Luftschiff kann bevorzugt sein, dass auch während der Verwendung als Auftriebskörper eine Vakuumpumpe mit dem Hohlkörper verbindbar ist, um den Druck im Innern des Hohlkörpers zu regulieren. So kann beispielsweise der Auftrieb gesteuert werden. Ebenso ist das Bereitstellen einer Vakuumpumpe während der Verwendung als Auftriebskörper als zusätzliches Sicherheitsfeature zu verstehen, welches sowohl zur Regulierung von Auftrieb als auch Stabilität des Hohlkörpers während des Betriebs geeignet ist.

Es kann ebenso bevorzugt sein, einen fortwährenden Pumpprozess zu verwenden, um die benötigten und geforderten Drücke bzw. Druckverhältnisse zu erzeugen.

In einer bevorzugten Ausführungsform des Verfahrens werden die Elemente nach dem Zusammenfügen von einer Membran umgeben. So kann insbesondere während des Pumpprozesses dem Hohlkörper bereits Stabilität verliehen werden. Es kann dabei bevorzugt sein, dass nach Erreichen des Zieldrucks im Innern des Hohlkörpers die Membran entfernt wird. Ebenso kann bevorzugt sein, dass die Membran während der Verwendung des Hohlkörpers als Auftriebskörper für ein Luftschiff am Äußeren des Hohlkörpers verbleibt, um die Stabilität weiter zu erhöhen.

In einer bevorzugten Ausführungsform des Verfahrens werden mehrere Hohlkörper zu einem Auftriebskörper zusammengefasst. Dafür können die Auftriebskörper beispielsweise durch geeignete Verbindungsmittel zusammengefasst werden. So kann ein Auftrieb erhöht werden. Des Weiteren kann die Sicherheit eines Luftschiffs durch Redundanz von Auftriebskörpern verbessert werden.

Kurzbeschreibung der Abbildungen
**Figur 1** zeigt eine schematische Darstellung eines Hohlkörpers bestehend aus Fünf- und Sechsecken.
**Figur 2** zeigt eine schematische Darstellung eines sechseckigen Elements.
**Figur 3** zeigt eine schematische Darstellung eines fünfeckigen Elements.

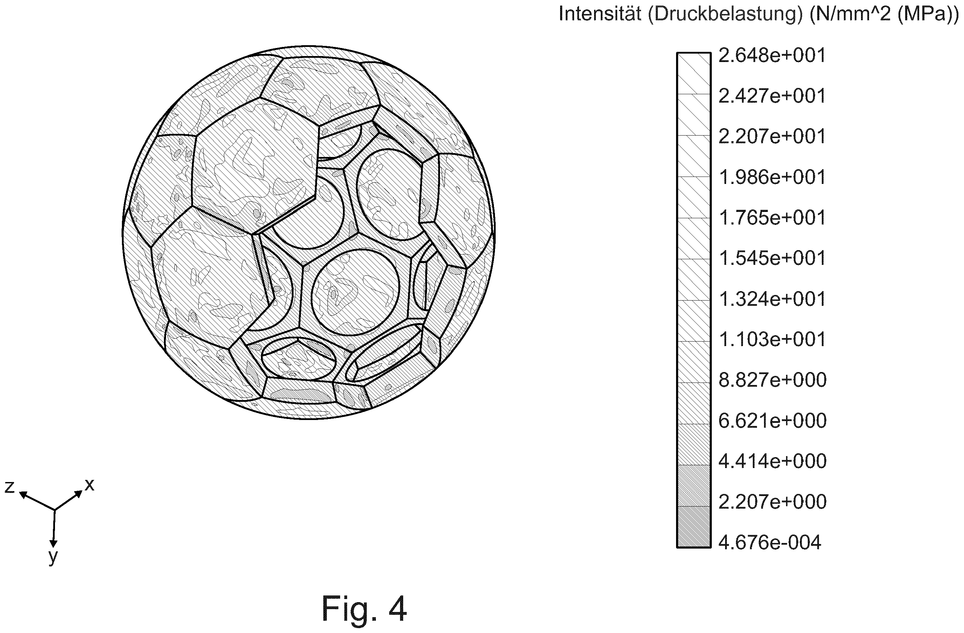

**Figur 4** zeigt eine Darstellung der statischen Belastung des Hohlkörpers.

### Detaillierte Beschreibung der Abbildung

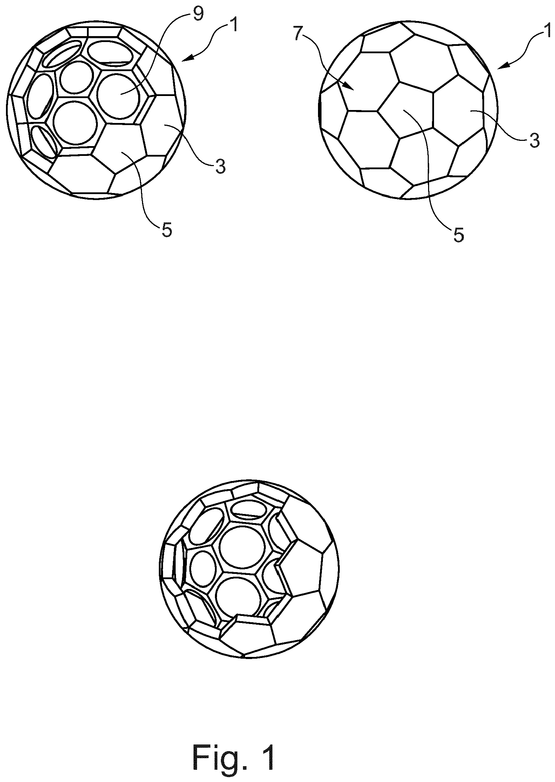

Figur 1 zeigt eine schematische Darstellung des Hohlkörpers **1.** Dieser besteht aus Sechsecken **3** und Fünfecken **5.** Einige der Elemente sind dabei transparent dargestellt, sodass die Innenfläche der Elemente **9** erkennbar ist. Ebenso ist die von den Elementen gebildete Außenfläche des Hohlkörpers **7** ersichtlich.

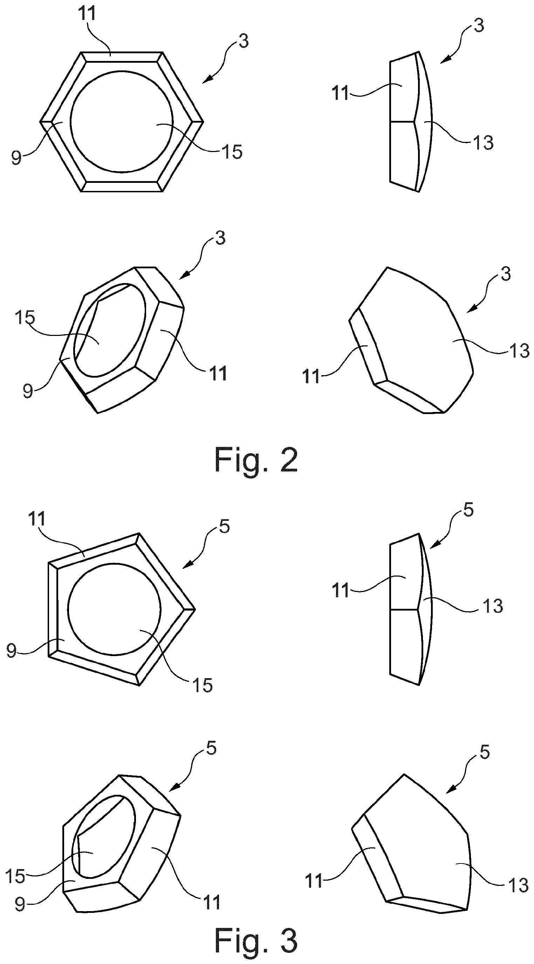

Figur 2 zeigt eine schematische Detaildarstellung eines sechseckigen Elements **3** aus verschiedenen Perspektiven. Auf allen Perspektiven ist die Verbindungsfläche **11** erkennbar, an der die Elemente des Hohlkörpers **1** aneinander anliegen und über die Elemente einen gegenseitigen Druck aufeinander ausüben, welcher zur Stabilität des Hohlkörpers **1** wesentlich ist. Die beiden Darstellungen des Sechsecks **3** auf der linken Seite der Figur ermöglichen eine Ansicht der Innenfläche der Elemente **9.** Die hier dargestellten Elemente weisen auf dieser Innenfläche **9** ein Loch **15** auf. Auf der rechten Seite wird die Außenfläche der Elemente **13** erkennbar, welche vorliegend gewölbt ist, um dem Hohlkörper **1** seine Kugelform zu geben.

Analog zeigt Figur 3 eine schematische Detaildarstellung eines fünfeckigen Elements **5** aus verschiedenen Perspektiven. Die Verbindungsfläche **11** ist erkennbar, an der die Elemente des Hohlkörpers **1** aneinander anliegen. Die beiden Darstellungen des Fünfecks **5** auf der linken Seite der Figur ermöglichen eine Ansicht der Innenfläche der Elemente **9.** Die hier dargestellten Elemente weisen ebenso auf dieser Innenfläche **9** ein Loch **15** auf. Auf der rechten Seite wird die Außenfläche der Elemente **13** erkennbar, welche vorliegend gewölbt ist.

Figur vier zeigt eine statische Analyse der Belastung des aus Fünf- **5** und Sechsecken **3** gebildeten Hohlkörpers **1.**

### Bezuqszeichenliste

- 1: Hohlkörper
- 3: Sechseck
- 5: Fünfeck
- 7: Außenfläche des Hohlkörpers
- 9: Innenfläche der Elemente
- 11: Verbindungsfläche
- 13: (gewölbte) Außenfläche der Elemente
- 17: Loch

## Patentansprüche

1. Dreidimensionaler, geschlossener und ellipsoider Hohlkörper (1) umfassend mindestens zweiunddreißig Elemente, wobei jedes Element Verbindungsflächen zur Verbindung mit Verbindungsflächen der anderen Elemente aufweist,
**dadurch gekennzeichnet, dass**
der Hohlkörper (1) von den Elementen im Wesentlichen gebildet wird, wobei die Verbindungsflächen (11) im Wesentlichen trapezförmig ausgebildet sind, wobei der Hohlkörper (1) druckdicht ausgebildet ist und im Inneren des Hohlkörpers (1) ein erster Druck vorliegt und außerhalb des Hohlkörpers (1) ein zweiter Druck vorliegt und wobei der erste Druck im Inneren des Hohlkörpers (1) kleiner ist als der zweite Druck außerhalb des Hohlkörpers (1).

2. Hohlkörper (1) nach Anspruch 1, wobei die Elemente, bevorzugt deren Umrissform, mindestens drei Ecken aufweisen, wobei die Elemente bevorzugt Dreiecke und insbesondere Fünfecke (3) und/oder Sechsecke (5) sind.

3. Hohlkörper (1) nach einem oder mehreren der vorigen Ansprüche, wobei die Elemente Doppelwände aus zwei miteinander wirkverbundenen Flächen sind.

4. Hohlkörper (1) nach einem oder mehreren der vorigen Ansprüche, **dadurch gekennzeichnet, dass** das Material der Elemente eine Druckfestigkeit zwischen 1 GPa und 10 GPa, bevorzugt zwischen 2,5 GPa und 4 GPa und/oder
eine Zugfestigkeit zwischen 0,1 GPa und 6 GPa, bevorzugt zwischen 3 GPa und 5 GPa und/oder ein E-Modul zwischen 100 GPa und 600 GPa, bevorzugt zwischen 200 GPa und 450 GPa, aufweist.

5. Hohlkörper (1) nach einem oder mehreren der vorigen Ansprüche, **dadurch gekennzeichnet, dass** das Material der Elemente eine Dichte zwischen 1 g/cm³ und 5 g/cm³ aufweist.

6. Hohlkörper (1) nach einem oder mehreren der vorigen Ansprüche, wobei die Elemente Aluminiumoxid umfassen.

7. Hohlkörper (1) nach einem oder mehreren der vorigen Ansprüche, wobei die Elemente Kohlenstofffasern, bevorzugt UMS-Kohlenstofffasern, umfassen.

8. Hohlkörper (1) nach einem oder mehreren der vorigen Ansprüche, wobei die Elemente an ihren Verbundstellen Abdichtungen aufweisen.

9. Hohlkörper (1) nach einem oder mehreren der vorigen Ansprüche, welcher von einer Membran umgeben ist.

10. Hohlkörper (1) nach Anspruch 9, wobei die Membran druckdicht ist.

11. Luftschiff umfassend einen Auftriebskörper, wobei der Hohlkörper (1) nach einem oder mehreren der vorigen Ansprüche den Auftriebskörper bildet.

12. Luftschiff umfassend einen Auftriebskörper, wobei mehrere Hohlkörper (1) nach einem oder mehreren der vorigen Ansprüche zum Auftriebskörper zusammengefasst werden.

13. Verfahren zur Verwendung des Hohlkörpers (1) nach einem oder mehreren der vorigen Ansprüche als Auftriebskörper für ein Luftschiff, wobei
- Elemente zu einem Hohlkörper (1) zusammengefügt werden,
- ein Vakuum im Inneren des Hohlkörpers (1) erzeugt wird.

14. Verfahren gemäß Anspruch 13, wobei die Elemente nach dem Zusammenfügen von einer Membran umgeben werden.

15. Verfahren nach Anspruch 13 oder 14, wobei mehrere Hohlkörper (1) zu einem Auftriebskörper zusammengefasst werden.
